(19) Europäisches Patentamt
European Patent Office
Office européen des brevets

(11) EP 2 333 943 B1

(12) **EUROPEAN PATENT SPECIFICATION**

(45) Date of publication and mention
of the grant of the patent:
**12.02.2014  Bulletin 2014/07**

(51) Int Cl.:
*H02M 1/36* (2007.01)          *H02M 1/42* (2007.01)

(21) Application number: **10015345.1**

(22) Date of filing: **06.12.2010**

(54) **Power supply circuit, motor drive device and refrigeration and air conditioner**

Netzstromkreis, Motorantriebsvorrichtung und Kühl- und Klimaanlage

Circuit d'alimentation électrique, dispositif de commande de moteur et réfrigération et climatiseur

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.12.2009  JP 2009281105**

(43) Date of publication of application:
**15.06.2011  Bulletin 2011/24**

(73) Proprietor: **Hitachi, Ltd.
Chiyoda-ku
Tokyo 100-8280 (JP)**

(72) Inventors:
• **Notohara, Yasuo
Tokyo 100-8220 (JP)**

• **Ito, Yoshiki
Hitachi-shi
Ibaraki (JP)**
• **Maeda, Daisuke
Tokyo 100-8220 (JP)**

(74) Representative: **Strehl, Peter
Patentanwälte
Strehl Schübel-Hopf & Partner
Maximilianstrasse 54
80538 München (DE)**

(56) References cited:
**EP-A1- 1 826 896      EP-A2- 0 921 626**

**Description**

BACKGROUND OF THE INVENTION

Field of the Invention

The present invention relates to a power supply circuit, and a motor drive device and a refrigeration and air conditioner, and in particular, relates to a power supply circuit suitable for performing the power factor correction or harmonic current suppression of a single-phase AC power supply by a switching operation, and to a motor drive device and refrigeration and air conditioner using the same.

Description of the Related Art

The power supply circuits for performing the power factor correction or harmonic current suppression of a single-phase AC power supply are currently widely used. Among them, a power supply circuit using a boost chopper circuit comprising a reactor, a switching element, and a diode is used as the power supply circuit of an inverter device (such as an air-conditioner or a heat pump hot-water supply device), which does not require the regeneration of power to the power supply, because the circuit configuration and control structure thereof are simple.

A number of power factor correction methods or harmonic current suppressing methods using a boost chopper circuit have been reported.

The method represented by JP-A-S59-198873 is one of the most commonly used one among such power supply circuit control methods using the boost chopper circuit, and is a method of forming a sine-wave current command waveform serving as a reference from a power supply voltage phase or power supply voltage waveform and controlling an input current into a sinusoidal waveform by using a current control loop. For this reason, this method requires a power supply voltage detection circuit or a circuit of current control structure, and the circuit configuration and control structure are a little complicated.

JP-A-HO1-114372 proposes a method using a simplified circuit configuration and control structure. This method is for controlling an input current waveform into a sinusoidal waveform without detecting a sine-wave current command waveform or power supply phase serving as a reference, and is a method which requires neither the above-described power supply voltage detection circuit nor current control structure.

Specifically, this is a method (this method is referred to as a 1-Kpis control method) using the principle that if the duty ratio "d" of a switching element of the boost chopper circuit is given as in Formula (1), then an input current is obtained as in Formula (2).

$$d = 1 - Kp \bullet |is| \qquad (1)$$

(where 1: 100% duty ratio, Kp: current control gain, is: input current (instantaneous value))

$$is = \frac{\sqrt{2} \bullet Vs \bullet \sin \omega t}{Kp \bullet Ed} \qquad (2)$$

(where Vs: power supply voltage effective value, Ed: DC voltage, $\omega$: electrical angle frequency)

Moreover, JP-2809463 proposes, as an application of the above-described technique, a partial switching operation method (referred to as a boost ratio stabilization control method) of stopping the switching operation in the vicinity of a peak of an input current for the purpose of achieving a higher efficiency of the boost chopper circuit.

The methods of JP-A-HO1-114372 and JP-2809463 can control an input current waveform so as to be made into a sinusoidal waveform with the simple circuit configuration and control structure as described above, and can achieve the power factor correction or harmonic current suppression of an AC power supply.

As described above, various control methods have been proposed for the power supply circuit using the boost chopper circuit, however, basically, the duty ratio of a switching element of the boost chopper circuit increases in a period during which no input current flows (a period during which the power supply voltage is low relative to the DC voltage), while in a period during which an input current flows (a period during which the power supply voltage is high relative to the DC voltage), the duty ratio of the switching element of the boost chopper circuit is reduced, thereby making the input current into a sinusoidal waveform.

Specifically, as shown in Formula (1) of JP-A-H01-114372, when the input current is low (zero), the duty ratio becomes a large value (100%). On the other hand, when the input current is high, the duty ratio becomes a small value.

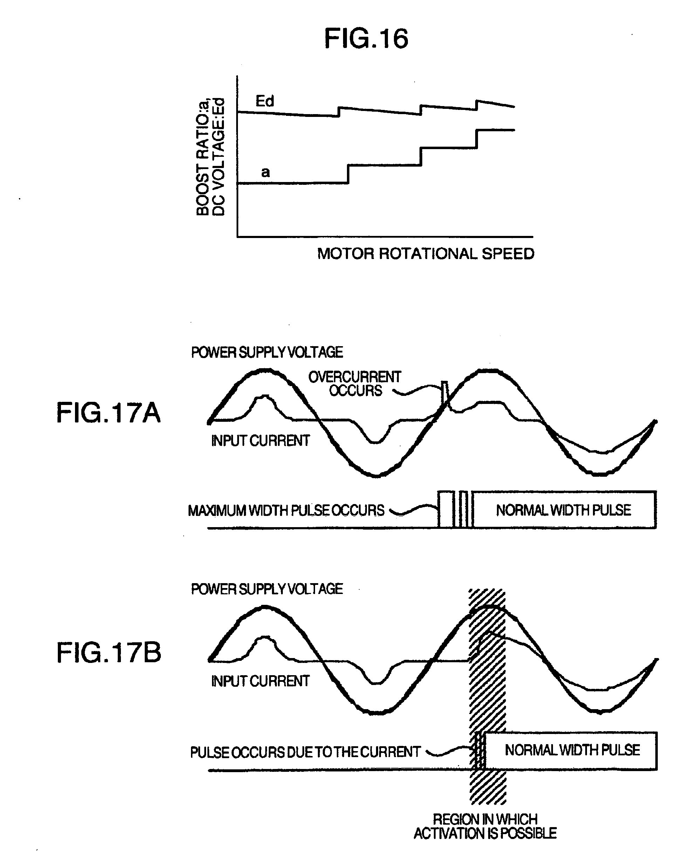

Here, a start timing of the switching operation of the power supply circuit using the boost chopper circuit is considered using FIGS. 17A, 17B.

FIG 17A schematically shows shapes of both a PWM signal (switching signal) applied to a switching element and an input current waveform when the switching operation starts in a period during which no current flows (a period during which the power supply voltage is low relative to the DC voltage), while FIG 17B schematically shows the PWM signal (switching signal) applied to the switching element and the input current waveform when the switching operation is started in a period during which the input current flows (in the vicinity of a peak value of the power supply voltage).

As described above, in the power supply circuit control method using the boost chopper, the duty ratio becomes large (the pulse width becomes wide) when the input current is low. For this reason, when the inductance value of the reactor is set to a small value or when the switching frequency is set to a low frequency (when the calculation cycle is long), an overcurrent may occur as the switching operation starts, as shown in FIG 17A.

In conventional circuits, an overcurrent protection circuit is provided for the purpose of protection of the switching element, and the switching operation is stopped when an overcurrent occurs. For this reason, starting the switching operation may be repeated over and over again, and depending on circumstances the operation of the power supply circuit or the normal operation of the system using this power supply circuit might not be performed.

In other words, if the switching operation of the power supply circuit using the boost chopper circuit starts in a period during which a sufficient input current is flowing (in the vicinity of a peak value of the power supply voltage or thereafter), as shown in FIG 17B, then the control starts from a state where the duty ratio is low (the pulse width is narrow) and therefore an overcurrent can be prevented. However, JP-A-S59-198873, JP-A-H01-114372, JP-2809463 do not take the above points into consideration.

At present, in a power supply circuit or a system using the same, achieving cost reduction is one of the critical issues, and for this reason, digital calculation using a microcomputer or the like, or a reduction in the reactor size (a reduction of inductance) is a problem we have to resolve. Accordingly, solving the above-described problems is critical.

Here, JP-3424461 discloses a method, wherein a DC voltage control loop is added to the control structure of a power supply circuit, and a DC voltage command value gradually increases when the power supply circuit starts switching, thereby preventing an abrupt increase in the DC voltage. The overcurrent may be suppressed to some extent using this method. However, when the input current is zero, the duty ratio becomes 100% either way and an overcurrent may occur.

Moreover, JP-A-H05-68376 describes the step of activating/stopping the switching operation of a power supply circuit according to an amount of the input current value, however, JP-A-HO5-68376 is intended to protect the overvoltage at the time of a light load, as shown below, which differs from the solution of the current problem.

Usually, the boost chopper circuit forcibly feeds a current through a reactor by turning on a switching element and stores an energy therein, and transfers this energy to a smoothing capacitor when the switching element is off. Therefore, the DC voltage will abruptly increase if the load of the power supply circuit does not consume power.

Then, JP-A-H05-68376 shows that an input current value is detected, and from the magnitude of the input current value, the load of the power supply circuit is estimated, and the control is made so as not to perform the switching operation of the power supply circuit when the load is light (when the input current is low).

Here, as described above, if the switching operation of the switching element of the boost chopper circuit starts when the duty ratio is low (the pulse width is narrow), an overcurrent can be prevented from being occurred.

However, as the method of narrowing the pulse width (shortening the calculation cycle) at the time of starting the switching operation, a method of temporarily increasing the PWM frequency may be contemplated.

JP-A-2006-67730 discloses a method of decreasing the PWM frequency in a period during which an input current instantaneous value is low, however, the method is for reducing the switching loss, and the goal thereof differs from the problem to be solved by the present invention. In other words, JP-A-2006-67730 also cannot solve the problem to be solved by the present invention.

EP 0 921 626 A2 discloses a power supply circuit with the features in the pre-characterizing portion of the independent claim.

SUMMARY OF THE INVENTION

As described above, the problem to be solved by the present invention is to prevent an overcurrent at the time of starting the switching operation in a power supply circuit using a boost chopper circuit.

In order to solve the above-described problem, the present invention suggests the power supply circuit as defined in the independent claim. Further advantageous features are set out in the dependent claims.

As one of specific means, a ripple component of a DC voltage is detected and the switching operation is started at a timing when the ripple component of a DC voltage becomes "positive".

As another means, an input current instantaneous value is compared with a value (e.g., the effective value or the like) proportional to the magnitude of an input current and the switching operation is started in a period during which the input current instantaneous value exceeds the value proportional to the magnitude of the input current.

As yet another means, a power supply voltage phase is detected and the switching operation is started when the power supply voltage phase is a predetermined phase.

Moreover, as another method, only for a predetermined period after the switching operation is started, the switching operation is performed at a frequency higher than a normal switching frequency.

According to the present invention, even with a power supply circuit using a boost chopper circuit, an overcurrent at the time of starting the switching operation can be prevented.

Other objects, features and advantages of the invention will become apparent from the following description of the embodiments of the invention taken in conjunction with the accompanying drawings.

BRIEF DESCRIPTION OF THE DRAWINGS

FIG. 1 is a whole configuration diagram showing a first embodiment of a power supply circuit of the present invention (Embodiment 1).

FIG 2 is a control block diagram showing a control content of the power supply circuit in the first embodiment (Embodiment 1).

FIG 3 is a flow chart showing an activation determination process in the first embodiment (Embodiment 1).

FIG 4 is an operation explanatory diagram in the first embodiment (Embodiment 1).

FIG 5A is a waveform chart showing a result of an experiment in the first embodiment (Embodiment 1).

FIG 5B is a waveform chart showing a result of the experiment in the first embodiment (Embodiment 1).

FIG 6 is a flow chart showing an activation determination process in the first embodiment (Embodiment 1).

FIG 7 is a flow chart showing an activation determination process in a second embodiment of the present invention (Embodiment 2).

FIG 8 is an operation explanatory diagram in the second embodiment (Embodiment 2).

FIG 9 is a flow chart of an activation determination process in a third embodiment of the present invention (Embodiment 3).

FIG 10 is an operation explanatory diagram in the third embodiment (Embodiment 3).

FIG 11 is a diagram of a power supply voltage phase detection circuit in the third embodiment (Embodiment 3).

FIG 12 is a whole configuration diagram showing a motor drive device of the present invention (Embodiment 4).

FIG 13 is an external view of a module in a fourth embodiment (Embodiment 4).

FIG 14 is a perspective view showing a hybrid IC in the fourth embodiment (Embodiment 4).

FIG 15 is a view showing an inverter air conditioner in the fourth embodiment (Embodiment 4).

FIG 16 is an operation explanatory diagram when the present invention is applied to the inverter air conditioner of the fourth embodiment (Embodiment 4).

FIG 17A is a view illustrating a problem at the time of starting the switching operation in a commonly used power supply circuit.

FIG 17B is a view illustrating a problem at the time of starting the switching operation in the commonly used power supply circuit.

FIG 18 is a flow chart showing an activation determination process in a fifth embodiment of the present invention (Embodiment 5).

FIG 19A is an explanatory view of a switching frequency change operation in the fifth embodiment (Embodiment 5).

FIG 19B is an explanatory view of a switching frequency change operation in the fifth embodiment (Embodiment 5).

DETAILED DESCRIPTION OF THE EMBODIMENTS

Hereinafter, the present invention will be described in detail in accordance with illustrated embodiments.

First Embodiment

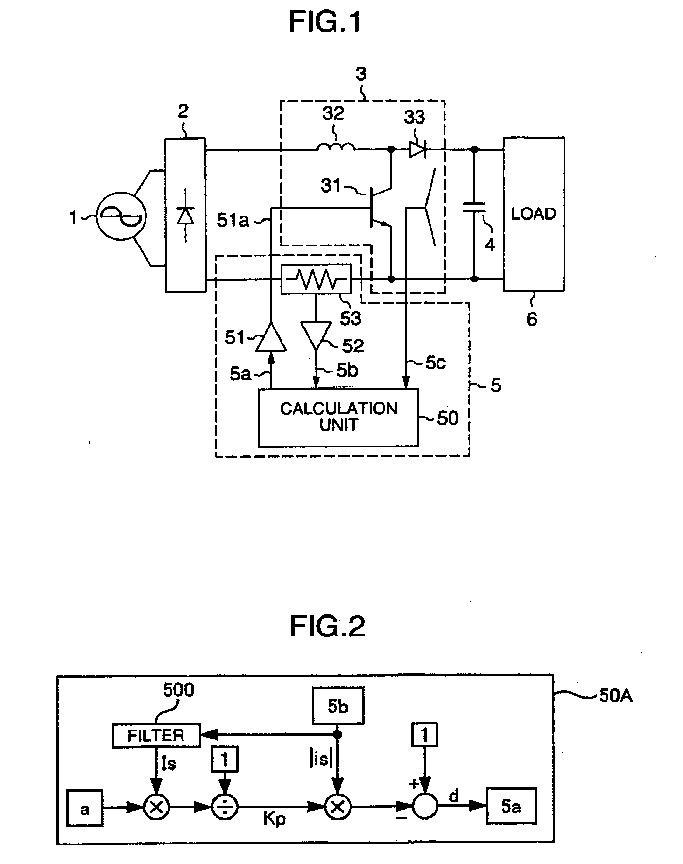

A first embodiment of the present invention will be described using FIG 1 to FIG 6. First, the configuration and operation of a power supply circuit are described using FIG 1.

The power supply circuit in this embodiment comprises a rectifier circuit 2 coupled to an AC power supply 1, a boost chopper circuit 3, a smoothing capacitor 4, and a control circuit 5, and supplies a DC power to a load 6 coupled to an output terminal of the smoothing capacitor 4.

The boost chopper circuit 3 has a reactor 32, a switching element 31 for short-circuiting the AC power supply 1 via the reactor 32, and a diode 33 for supplying a terminal voltage of the switching element 31 to the smoothing capacitor 4. The boost chopper circuit 3 is a circuit which boosts a DC voltage utilizing a switching operation of the switching element 31 and the energy storage effect by the reactor 32. Here, a self-arc-extinguishing semiconductor element, such as an IGBT (Insulated Gate Bipolar Transistor) or a transistor, is used for the switching element 31, and is driven by a drive signal 51a fed from the control circuit 5.

The control circuit 5 comprises: an input current detection circuit which detects an input current flowing in from the AC power supply 1 using a shunt resistor 53 and an amplifier 52 and outputs an input current value 5b; a DC voltage detection circuit for detecting a DC voltage which is a terminal voltage of the smoothing capacitor 4 and outputting a DC voltage value 5c; a calculation unit 50 which calculates a duty ratio signal 5a for controlling the switching element 31 according to the input current value 5b; and a drive circuit 51 which amplifies the duty ratio signal 5a and outputs a drive signal 51a for driving the switching element 31. Here, the detail of the DC voltage detection circuit is not illustrated. However, if a voltage dividing circuit using resistors is used, the DC voltage detection circuit can be realized with a simple circuit configuration.

A semiconductor arithmetic element (hereinafter, referred to as a microcomputer) represented by a single chip microcomputer is used for the calculation unit 50, wherein the input current value 5b and the DC voltage value 5C are converted into digital values using an A/D converter built in the microcomputer and the calculation is performed using these digital values. The duty ratio signal 5a is output in the form of a PWM pulse signal using a PWM timer built in the microcomputer.

Next, a control processing performed in the calculation unit 50 is described using FIG 2. Here, a portion to calculate the duty ratio signal 5a using the input current value 5b is described. A portion to generate a PWM pulse signal from the calculated duty ratio signal 5a using the PWM timer is omitted because it is a function of the microcomputer.

In the control block diagram of FIG 2, the control structure of the boost ratio stabilization control described in JP-2809463 is employed. The control structure may be the ones described in JP-A-S59-198873 and JP-A-HO1-114372, for example.

Here, the 1-Kpis control method and the boost ratio stabilization control method are briefly described once again.

If the duty ratio signal (on-time ratio) "d" of the switching element 31 of the boost chopper circuit 3 shown in FIG 1 is given as in Formula (1), then the input current is obtained as in Formula (2). As apparent from Formula (2), even without a reference waveform, such as the power supply voltage waveform, the input current becomes a sine wave synchronized with the power supply voltage Vs. This is the basic principle of the 1-Kpis control method.

$$d = 1 - Kp \bullet |is| \qquad (1)$$

(where 1: 100% duty ratio, Kp: current control gain, is: input current (instantaneous value))

$$is = \frac{\sqrt{2} \bullet Vs \bullet \sin \omega t}{Kp \bullet Ed} \qquad (2)$$

where Vs: power supply voltage effective value, Ed: DC voltage, $\omega$: electrical angle frequency. According to the basic principle, the DC voltage Ed can be controlled by determining the above-described proportional gain Kp from a DC voltage deviation.

Here, deforming Formula (2),

$$Kp \bullet is = \frac{\sqrt{2} \bullet Vs \bullet \sin \omega t}{Ed} \qquad (3)$$

Formula (3) represents an instantaneous boost ratio.

Here, considering a boost ratio "a" in terms of an effective value, we obtain Formula (4) below.

$$Kp \bullet Is = \frac{1}{a} \qquad\qquad (4)$$

(where, Is: input current (effective value))

If $Kp \bullet Is$ is controlled so as to be constant, the DC voltage Ed can be controlled to be "a" times the power supply voltage Vs.

If based on the above method, a duty ratio signal d is given by the following formula, we obtain Formula (5) below.

$$d = 1 - Kp \bullet |is|, \qquad Kp = \frac{1}{a \bullet Is} \qquad\qquad (5)$$

If the input current |is| exceeds $a \bullet Is$, the duty ratio signal "d" becomes 0% and the switching operation will stop. Thus, the input current will have a waveform which is not chopped in the vicinity of a peak of the power supply voltage (in a region in which the input current exceeds $a \bullet Is$), thereby achieving a reduction in the switching loss. This is the principle of the boost ratio stabilization control.

By controlling in this manner, the input current waveform can be controlled into a sinusoidal waveform synchronized with the power supply voltage only with the use of an input current instantaneous value and a proportional gain without detecting a sine-wave current command waveform or power supply phase serving as a reference and furthermore the switching operation in the vicinity of a peak value of the input current can be stopped (partial switching operation is possible).

If the above-described formulas are expressed in a block diagram, we obtain a block diagram 50A of FIG 2. Here, the input current effective value Is is calculated in a simple way by using the input current value 5b through a filter 500. The average value or effective value may be calculated in a precise way and with this calculated value the control may be performed. Moreover, a predetermined value is used for the boost ratio "a".

In this block diagram, in the calculation of the duty ratio signal d, as shown in Formula (1) and Formula (5), a product of the input current instantaneous value (absolute value) |is| and the proportional gain Kp is subtracted from 1 (100%) which is the maximum duty ratio, however, in the actual PWM timer setting, if the value of the product of the input current instantaneous value (absolute value) |is| and the proportional gain Kp is regarded as the off-time ratio and set, there is no need to subtract this value from 1 which is the maximum duty ratio.

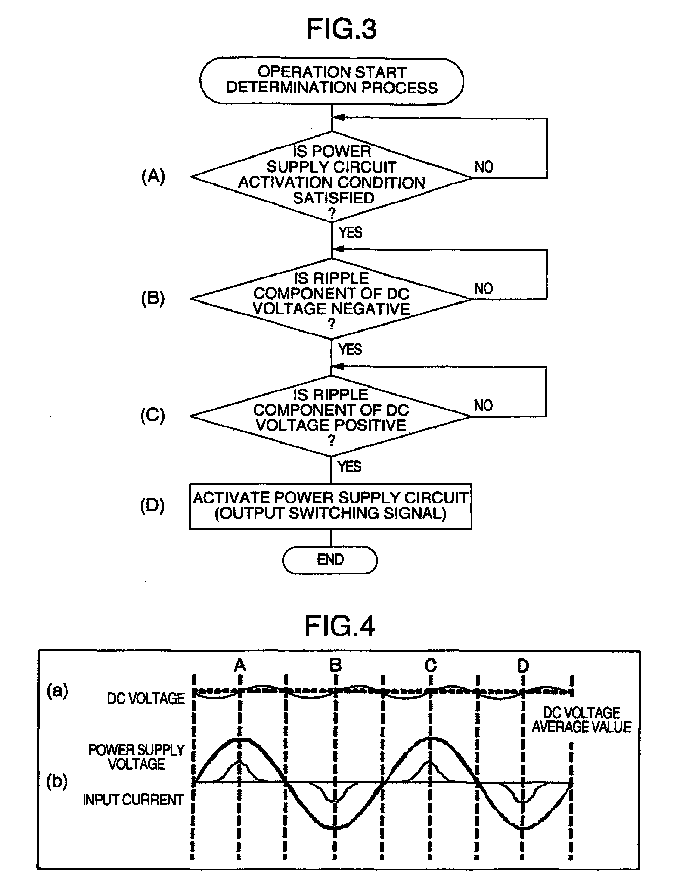

Next, the operation of the present invention is described using FIG 3. FIG 3 shows a general flow chart of the switching operation start determination process. In Step A of FIG 3A, it is determined whether or not an activation condition of the power supply circuit is satisfied. As the activation condition of the power supply circuit, whether or not a load coupled to the power supply circuit consumes a certain amount of power is confirmed from the input current value. Specifically, although also described in JP-A-H05-68376, it is determined whether or not the magnitude (the average value or effective value) of the input current value is equal to or greater than a predetermined value.

As a result, if the activation condition of the power supply circuit is satisfied, the flow transitions to Step B. In other words, before activating the power supply circuit, whether or not the activation condition is satisfied is always monitored.

In Step B, a ripple component of the DC voltage is detected, and it is checked whether or not the value thereof is "negative". If this value is "negative", the flow transitions to Step C. In Step C, in contrast to Step B, it is determined whether or not the ripple component of the DC voltage is "positive". Here, if the ripple component of the DC voltage becomes "positive", the flow transitions to Step D and the switching operation of the power supply circuit is started. In other words, the switching operation of the boost chopper circuit is started at the above-described timing, and thereafter, the power supply circuit is normally controlled according to the control block diagram shown in FIG 2.

As described above, a fact that the ripple component of the DC voltage is "negative" is detected in Step B, and thereafter in Step C a fact that the ripple component of the DC voltage is "positive" is detected, so that an instant when the ripple component of the DC voltage changes from a "negative" value to a "positive" value can be detected in Step C.

Next, a relation between a ripple in the DC voltage and an input current peak value is described using FIG 4. FIG 4(a) shows the waveform of a ripple component of a DC voltage and FIG 4(b) shows the waveforms of a power supply voltage and input current.

As shown in FIG 17B, if the switching operation is started in the vicinity of a peak value of the input current, the duty ratio starts with a small value and an overcurrent can be prevented.

Here, considering the ripple in the DC voltage, the cause of an increase in the DC voltage is that the input current is supplied from the power supply to the smoothing capacitor. In other words, the timing at which the ripple component of the DC voltage changes from a "negative" value to a "positive" value substantially coincides with the timing of the peak value of the input current (the amplitude or phase of the ripple in the DC voltage slightly varies depending on the inductance of the reactor, the capacitance of the smoothing capacitor, or the condition of the load). Then, if the instants (points A, B, C, and D) at which the ripple component of the DC voltage changes from a "negative" value to a "positive" value are detected, the timing at which the switching operation is started can be determined.

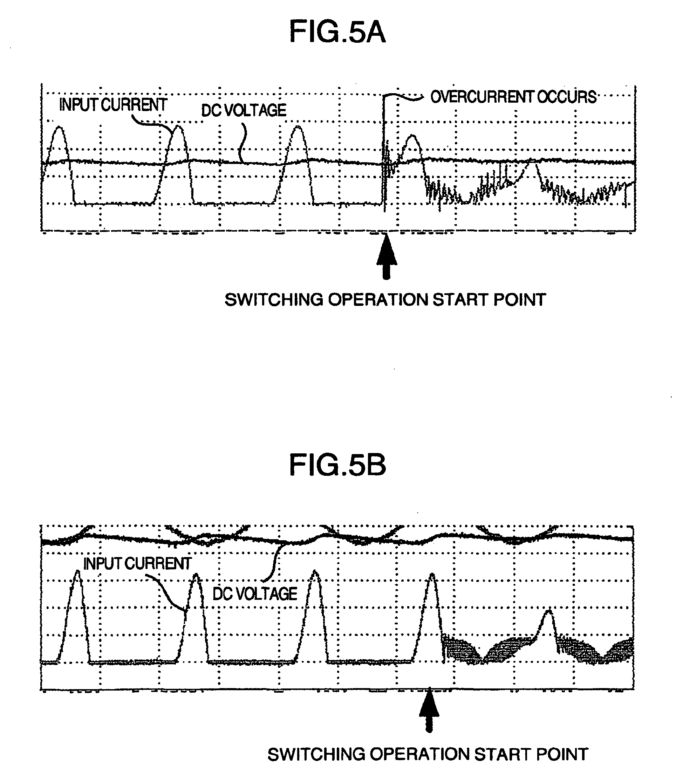

FIGS. 5A, 5B show an input current waveform at the time of actual activation, respectively. FIG 5A shows a waveform when the switching operation is started in a period during which the input current is small, while FIG. 5B is a waveform when the switching operation is started using the first embodiment. As shown in FIG 5B, it is recognized that an overcurrent of the input current can be prevented. Note that, for the control structure, the both cases use the boost ratio stabilization control shown in JP-2809463 described above.

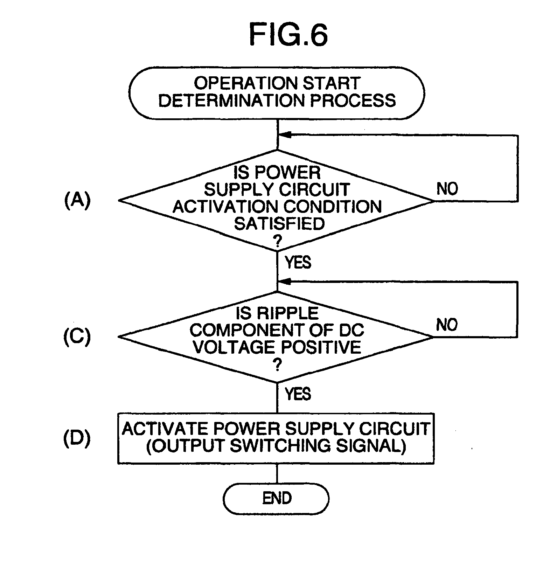

FIG 6 shows a simplified version of the process of FIG 3. This method does not include the processing of Step B of FIG 3, i.e., this method does not detect the "negative" ripple component of the DC voltage. In order to correctly detect an instant when the ripple component of the DC voltage changes from a "negative" value to a "positive" value, the process of FIG 3 is effective, however if the calculation cycle of the power supply activation process can be shortened or if the boost ratio stabilization control operation shown in JP-2809463 (the control originally intended for temporarily stopping the switching in the vicinity of a current peak) is used, then as shown in FIG 6 the processing of Step B of FIG 3 may be omitted.

By using this embodiment in this manner, an overcurrent at the time of starting the switching operation can be prevented, and a smooth activation of the power supply circuit can be achieved. Moreover, a stress to the switching element can be also suppressed and the reliability of the power supply circuit will be also improved.

Here, considering the mechanism of occurrence of an overcurrent, the first half region (the region in which the input current instantaneous value increases) of the power supply half cycle is a region (the region in which the current flows too much) in which the duty ratio of the PWM signal should be gradually reduced, however, in the case of digital control, there is a calculation delay and therefore the duty ratio cannot be corrected in time and an overcurrent will occur.

In contrast, the latter half region (the region in which the input current instantaneous value decreases) of the power supply half cycle is a region (the region in which the current is difficult to flow) where the duty ratio of the PWM signal should be gradually increased, and therefore an overcurrent will not occur even if there is some calculation delay.

Because the vicinity of an input current peak value is a region in which the change in the magnitude of the power supply voltage is small (a region in which the duty ratio is small), an overcurrent will not occur even if there is a calculation delay.

Therefore, there is no need to start the switching operation precisely at a peak of the input current, and it would be no problem if the switching operation can be started in a period during which a current is flowing after the vicinity of a peak value of the input current.

Second Embodiment

A method of starting the switching operation in the vicinity of an input current peak is described in a second embodiment.

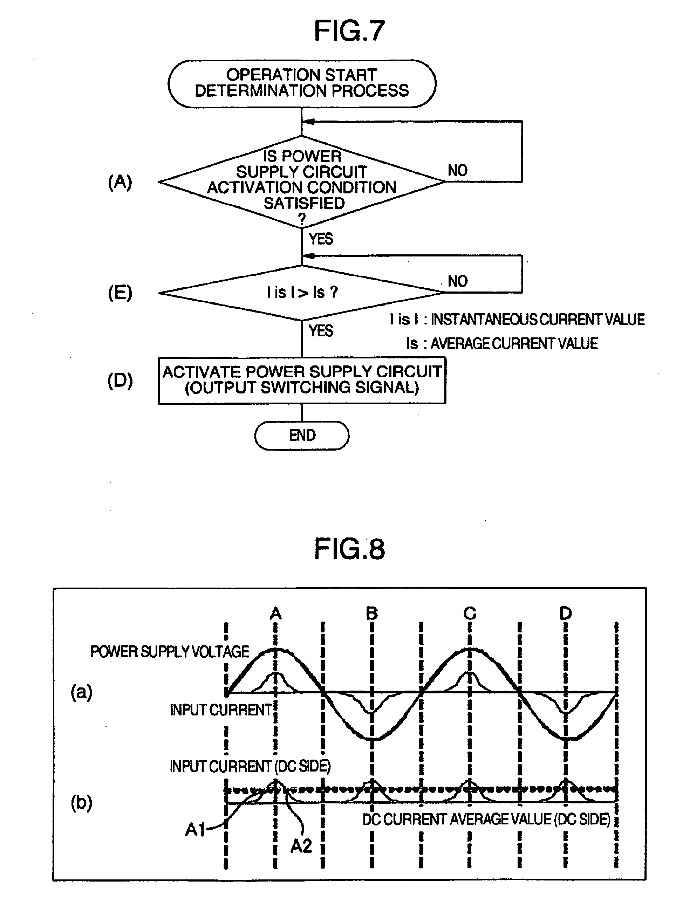

The second embodiment is described using FIG 7 and FIG 8. Since the circuit configuration and control structure are the same as those of the first embodiment, the description thereof is omitted.

The activation timing of the switching operation is detected using the ripple component of the DC voltage in the first embodiment, while in the second embodiment the activation timing of the switching operation is detected using an input current detection value.

In a general flow chart of FIG 7, the difference from FIG 3 or FIG 6 is only the processing of Step E. Therefore, the processing of Step E is described.

In FIG 3, a change point from a "negative" value to a "positive" value of the ripple component of the DC voltage is detected, while in the second embodiment, an instantaneous value of the input current is compared with, for example, the average value, and a period during which the input current instantaneous value is equal to or greater than the average value is regarded as the period during which the switching operation can be started. Even with this processing, the start timing of the switching operation in the vicinity of a peak value of the input current can be detected.

FIG. 8 is a diagram showing a relationship among these values and timing. FIG. 8(a) shows the waveform of the power supply voltage and the waveform of the input current, and FIG 8(b) shows the waveform of the input current detection value (the detection waveform of the input current value 5b of FIG. 1) and the waveform of the input current average value. As shown in this diagram, the activation timing (between a point A1 to a point A2) can be detected by comparing the input current with the input current average value.

Here, in this embodiment, a region in which the switching operation can be started is detected from the input current and the input current average value, however, if the effective value rather than average value of the input current, or a value obtained by multiplying the average value by a predetermined constant, or the like is used, the range of the region in which the switching operation can be started (between the point A1 to the point A2) is narrowed and the accuracy of an input current peak value will be improved.

Also in this embodiment, the same effect as the first embodiment can be obtained. Moreover, because there is no need to detect the ripple in the DC voltage, the DC voltage detection circuit can be omitted depending on an applied system, and cost reduction can be also achieved.

Third Embodiment

In Embodiment 1 and Embodiment 2, the embodiments have been described as a method which does not detect a power supply voltage phase, while in Embodiment 4, as with the method described in JP-A-S59-198873, an embodiment in the case originally capable of detecting the power supply voltage phase is described below. The description of the whole configuration of the circuit is omitted.

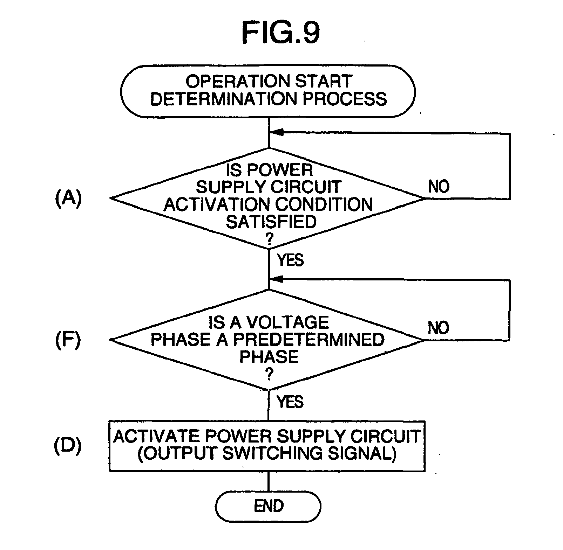

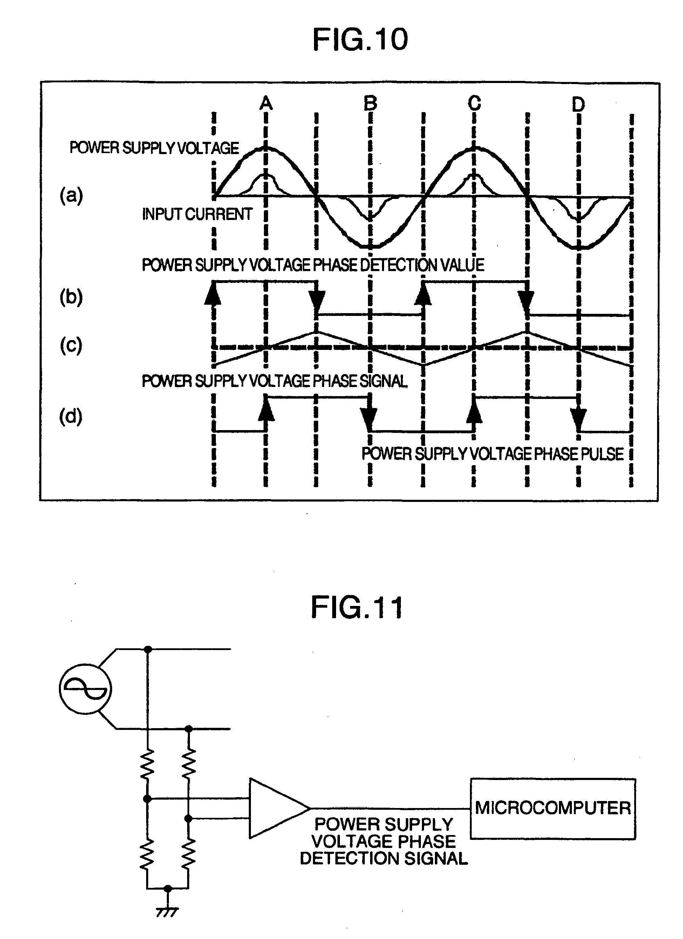

The difference in the switching operation start determination process of FIG. 9 is only the processing of Step F, and in the processing of Step F, a power supply voltage phase is calculated, and it is checked whether or not the power supply voltage phase is a phase in which the switching operation can be started. A method of generating the phase in which the switching operation can be started is described using FIG. 10.

Part (a) of FIG. 10 shows the waveform of the power supply voltage and the waveform of the input current, part (b) of FIG 10 shows a power supply voltage phase detection value which a power supply voltage phase detection circuit shown in FIG 11 generates, part (c) of FIG.10 shows a power supply voltage phase signal which is calculated in the control microcomputer on the basis of the power supply voltage phase detection value, and part (d) of FIG 10 shows a power supply voltage phase pulse which is generated on the basis of the above-described power supply voltage phase signal.

In the control microcomputer, the power supply voltage phase signal is updated as shown in the part (c) of FIG. 10 on the basis of the rising edge and falling edge of the power supply voltage phase detection value shown in the part (b) of FIG. 10 and a phase update timer (not shown). Then, the power supply phase signal is compared with intermediate values (corresponding to 90 degrees and 270 degrees of the power supply phase) to generate the power supply voltage phase pulse as shown in the part (d) of FIG. 10.

Here, the rising edge and falling edge of the above-described power supply voltage phase pulse occur at 90 degrees and 270 degrees of the power supply voltage phase, respectively, which correspond to the vicinity of a peak value of the input current. Therefore, if the rising edge and falling edge of the above-described power supply voltage phase pulse is used as the switching operation start timing, the switching operation can be started as in the first and second embodiments.

Here, in this embodiment, the power supply voltage phase detection value is detected by the control microcomputer and subsequently an activation timing is obtained by software processing, however, the activation timing may be obtained only by means of a hardware circuitry. Moreover, in contrast, even a method of capturing the power supply voltage directly into the microcomputer and calculating the activation timing in software would pose no problem.

In this embodiment, since the power supply voltage phase can be detected, the switching start timing can be precisely detected. Moreover, this embodiment can be applicable without requiring any additional circuit because this method is originally intended for detecting the power supply voltage phase.

In the foregoing, the switching operation start timing has been described in the first embodiment to the third embodiment, however, as shown in FIG 5 of the first embodiment, as with JP-2809463, in the case of a switching method of temporarily stopping the switching operation in the vicinity of a current peak value, the actual start of the switching operation is after a predetermined temporary stop period has ended.

Therefore, in a power supply circuit employing such a switching method, for the switching operation start timing, the switching operation may be started from the latter half region in which the input current starts to fall from a peak value, without any problem.

In other words, the switching operation may be started in the latter half region of a half cycle of the power supply voltage cycle.

Fourth Embodiment

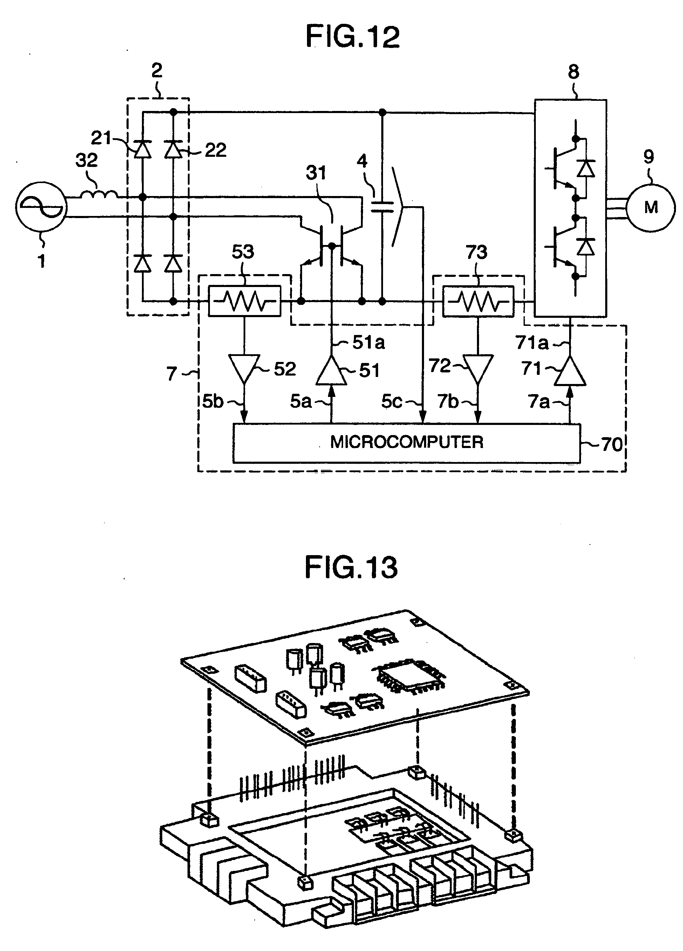

A fourth embodiment of the present invention will be described using FIG 12 to FIG 16. The element with the same reference numeral as that of the first to third embodiments performs the identical operation, and the description thereof is omitted.

In FIG 12, a motor drive circuit comprising a motor 9 and an inverter circuit 8 is coupled as a load of the power supply circuit of the present invention, and the control circuit of the power supply circuit of the present invention is integrated with the control circuit of the inverter circuit 8. In other words, in the control circuit 7 shown in FIG 12, one microcomputer is used to control the power supply circuit and the inverter circuit.

Only a portion different from the first embodiment is described. The inverter circuit 8 is an inverter circuit comprising an IGBT and a diode, and the motor 9 is a permanent magnet synchronous motor.

Although the configuration of the boost chopper circuit differs from the first embodiment, the operation similar to the first embodiment is possible even with this circuit configuration. Here, diodes 21, 22 within the rectifier circuit 2 perform the same operation as the diode 33 of the boost chopper circuit 3 of the first embodiment, in addition to the operation of rectifying the power supply. In other words, the diodes 21, 22 preform two operations described above, and one diode of power loss can be effectively reduced by employing this circuit configuration.

The control circuit 7 controls, as described above, the power supply circuit of the present invention and the inverter circuit using the microcomputer. In the microcomputer 70, the control calculation of the power supply circuit as described in the first to third embodiments and the control calculation of the inverter circuit are performed.

Since the configuration of the control circuit of the power circuit portion is the same as the content described in the first to third embodiments, the description thereof is omitted. Here, the configuration of the control circuit of the inverter circuit portion is briefly described.

In the motor control of this embodiment, because a motor current sensorless control and a position sensorless vector control are performed, what is detected from the inverter circuit is only a DC current flowing through a shunt resistor 73 disposed on the DC side. Specifically, as shown in FIG 12, a voltage generated in the shunt resistor 73 is amplified by an amplifier 72, and is captured as a DC current detection value 7b using an A/D converter of the microcomputer. Moreover, a PWM signal 7a supplied to a switching element of the inverter circuit is supplied to the inverter circuit as a drive signal 71a via a drive circuit 71.

Here, although not illustrated, within the microcomputer 70, the control unit of the power supply circuit described in the first to third embodiments and a motor current sensorless control unit and a position sensorless vector control unit are incorporated, wherein information of internal values can be exchanged from each other. With the above-described configuration, the power supply circuit performs the same operation as the first to third embodiments.

Although the control calculation of the inverter circuit is the position sensorless control using a vector control, the detailed description is omitted in the present application. The present invention is not limited to a particular control method.

FIG 13 is an overview of a module having the power supply circuit, inverter circuit, and control circuit integrated therein, as an example of the utilization form of this embodiment.

This module is an integrated module, wherein power semiconductors, such as an IGBT and a diode, are mounted in a bare chip state in the lower part of the module and the control circuit is disposed in an upper substrate. Forming a module facilitates the application of the present invention and allows an inexpensive system to be built.

Here, in this embodiment, an inverter circuit using a vector control has been described, however, the same effect can be obtained even if a conventionally widely used 120 degree control type inverter circuit is used.

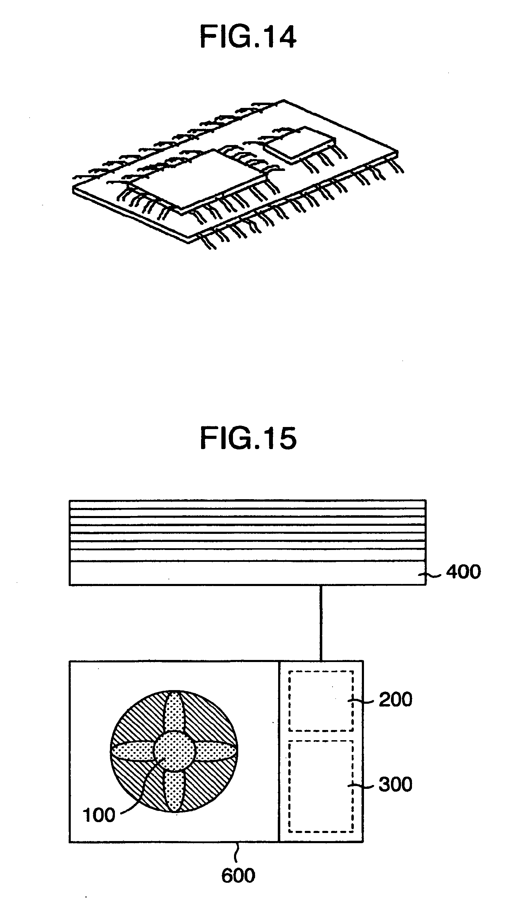

FIG 14 is an overview of a hybrid IC of a control circuit portion of the power supply circuit, as an example of the utilization form of this embodiment. Making a hybrid IC facilitates construction of power supply circuits having various power capacities.

FIG 15 is an external view of a separator type inverter air conditioner, and is an example when the motor drive device of this embodiment is applied as a compressor drive device of the inverter air conditioner.

This air conditioner comprises an outdoor unit 600 and an indoor unit 400. Within the outdoor unit 600, there are provided a compressor 300 integrated with a motor, an outdoor fan 100, and a motor drive device 200 for driving the compressor 300 or the outdoor fan 100.

FIG 16 is an operation explanatory diagram showing changes in the motor rotational speed, the boost ratio "a" of the power supply circuit, and the DC voltage when the above-described inverter air conditioner is operated.

As shown in FIG 16, in a region in which the motor rotational speed is low, in other words when the load is light, the inverter air conditioner is operated with the boost ratio "a" reduced. In this case, because the DC voltage can be suppressed to be low, the switching loss or the like of the power supply circuit can be reduced and furthermore the loss of the inverter circuit and motor can be also reduced, thereby enabling a highly efficient operation.

In contrast, when the load is heavy (the motor rotational speed is high), the DC voltage is increased by increasing the boost ratio "a", thereby enabling a high output power. In other words, both the high efficiency and high output power can be simultaneously achieved by changing the boost ratio "a" in response to the load (motor rotational speed).

As described above, if this embodiment is used, an overcurrent at the time of starting the switching operation in the power supply circuit can be prevented and a smooth activation of the power supply circuit is possible. Moreover, when the power supply circuit of the present invention is applied to systems, such as a motor drive circuit and an inverter air conditioner, an activation failure and the like due to an overcurrent can be prevented, a stable operation of the system is possible, and the reliability will be also improved. Moreover, the added value of an application system will be also improved.

Fifth Embodiment

In the above-described embodiments, the embodiments related to how to find a timing at the time of starting the switching operation and their application embodiments have been described.

Here, reconsidering the cause of the occurrence of an overcurrent, the calculation delay from detecting an input current and determining the duty ratio and until the duty ratio is output as a PWM signal is the cause. In other words, the calculation delay of digital processing is the cause.

In this embodiment, an embodiment wherein the switching frequency is made higher than the normal frequency only at the time of starting the switching operation in the power supply circuit (an embodiment wherein the calculation cycle and the PWM signal output cycle are made faster) is described. It is also possible to combine this embodiment with the above-described embodiments.

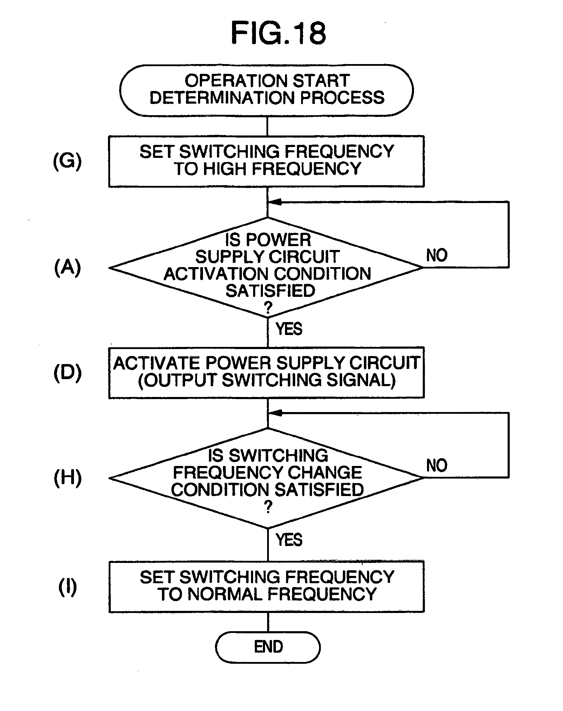

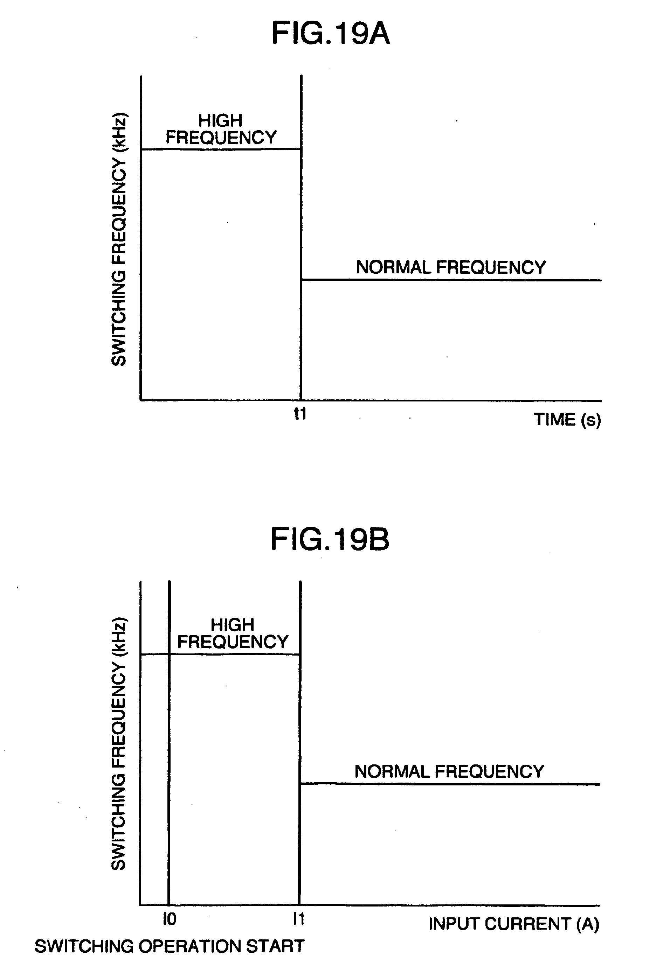

The whole configuration of the power supply circuit, the control structure, and the like are the same as those described in the first embodiment, and the content of the switching operation is the same. Since a different portion is only the content of the switching operation start determination process, the operation is briefly described using FIG 18 and FIG 19.

In a flow chart of FIG 18, in the step with the same reference numeral as that in FIG 3 or FIG 7, the same operation is performed and thus the description thereof is omitted.

In Step G of FIG. 18, the switching frequency of the power supply circuit is set to a high frequency. In this embodiment, the value of a setting register or the like of the PWM timer built in the microcomputer is just rewritten but the actual switching signal is not output.

In Step H, the switching frequency change condition is checked, and if the condition is satisfied, the flow transitions to Step I, where the switching frequency is set and changed to the normal frequency and then this switching operation start determination process is complete.

FIGS. 19A, 19B show an example of the situation (operation) of a switching frequency change, respectively. FIG 19A shows, as an example, a case where the switching frequency is changed over time, while FIG 19B shows, as an example, a case where the switching frequency is changed according to the magnitude of the input current.

Here, t1 of FIG. 19A is the timing at which the frequency is changed, and may be basically set to one cycle of the power supply frequency or to a certain short time. Similarly, I1 of FIG 19B is the timing at which the frequency is changed. In this diagram, the switching operation is performed at a high frequency when the input current is a low current equal to or less than I1 (when the load is light), however, this invention is not limited thereto, and the switching from a high frequency to a low frequency may be performed at a lower input current value without any problem. Here, as described in JP-A-H05-68376, I0 indicates the current value as the converter activation condition (in the processing of Step A of FIG. 18).

FIGS. 19A, 19B show two patterns as an example of changing the switching frequency, however, since the present goal is to reduce the width of the first pulse at the time of starting the switching operation and to prevent an overcurrent, any method satisfying this goal may be used.

Moreover, the change width of the switching frequency may be desirably approximately two times the normal frequency.

In this embodiment, an overcurrent is prevented by setting the switching frequency at the time of starting the switching operation to a higher frequency and thereby reducing the pulse width, and therefore there is no need to separately set the switching operation start timing. However, if the switching operation start determination process of the above-described embodiments is used at the same time, it is possible to further suppress the possibility for an overcurrent to occur.

It should be further understood by those skilled in the art that although the foregoing description has been made on embodiments of the invention, the invention is not limited thereto and various changes and modifications may be made without departing from the scope of the appended claims.

**Claims**

1. A power supply circuit comprising
   a rectifier circuit (2) for converting an AC power supply (1) into a DC power supply
   and
   a smoothing circuit (4),
   the power supply circuit further comprising a control unit (5) adapted to control an input current flowing in from the AC power supply (1) using a boost chopper circuit (3),
   the boost chopper circuit (3) comprising a switching element (31) for performing a switching operation based on a duty ratio signal, an inductor (32), and a diode (33),

**characterized in that** the switching element is adapted to start the first switching operation in a vicinity of a peak value of the input current instantaneous value or in the second half region of a half cycle of the power supply cycle in which the input current value starts to fall from a peak value.

2. A power supply circuit according to claim 1 further comprising
an input current information generation unit (52, 53) for generating information on an input current flowing in from the AC power supply; and
the control unit (5) adapted to calculate a product of the information on an input current and a set coefficient, and to generate at least the duty ratio signal for defining an operation of the switching element based on this product.

3. The power supply circuit according to claim 1 further comprising
a DC voltage ripple component detection unit for detecting a ripple component of a DC voltage which is a voltage between both ends of the smoothing circuit,
wherein at a transitional point of a sign of the ripple component of a DC voltage detected by the DC voltage ripple component detection unit, or in a period during which the ripple component is positive, the period being regarded as the vicinity of a peak value of the input current instantaneous value or the second half region of a half cycle of the power supply cycle in which the input current value starts to fall from a peak value, the switching element is adapted to start the first switching operation.

4. The power supply circuit according to claim 1 further comprising a calculation unit for calculating a magnitude of the input current, and
a comparison unit for comparing the magnitude of the input current with the input current instantaneous value, wherein in a period during which the input current instantaneous value is higher than the magnitude of the input current, the period being regarded as the vicinity of the peak value of the input current instantaneous value or the second half region of a half cycle of the power supply cycle in which the input current value starts to fall from a peak value, the switching element (31) is adapted to start the first switching operation.

5. The power supply circuit according to claim 4,
wherein as the magnitude of the input current, either an average value or effective value of the input current instantaneous value, or a value obtained by multiplying a filtered value of the input current instantaneous value by a predetermined coefficient is used.

6. The power supply circuit according to claim 1 further comprising a unit for detecting a power supply voltage phase of the AC power supply,
wherein in a period during which the power supply voltage phase is a predetermined phase, the period being regarded as the vicinity of the peak value of the input current instantaneous value or the second half region of a half cycle of the power supply cycle in which the input current value starts to fall from a peak value, the switching element (31) is adapted to start the first switching operation.

7. A motor drive device comprising
the power supply circuit according to claim 2,
wherein as a load of the power supply circuit, a motor and an inverter circuit for driving the motor are coupled to the power supply circuit, the motor drive device further comprising a coefficient change unit for changing the coefficient in response to a rotational speed of the motor or a load state.

8. A refrigeration and air conditioner,
wherein the motor drive device according to claim 7 is applied to a drive of a compressor drive motor of the refrigeration and air conditioner.

9. A module comprising
the power supply circuit according to claim 1,
an inverter circuit for driving a motor as a load of the power supply circuit, and
a control circuit for controlling the inverter circuit and the power supply circuit integrated therein.

10. The power supply circuit according to claim 1,
wherein at a time of the first switching operation of the switching element (31), a switching frequency of the switching element is higher than a normal switching frequency.

**11.** The power supply circuit according to claim 1,
wherein the switching element (31) is adapted to start the first switching operation in a vicinity of a peak value of the input current instantaneous value or in the second half region of a half cycle of the power supply cycle in which the input current value starts to fall from a peak value, and wherein a switching frequency of the switching element is higher than a normal switching frequency.

**12.** The power supply circuit according to claim 1,
wherein the switching element (31) is adapted to start the first switching operation after a half cycle of the AC power supply voltage.

**13.** The power supply circuit according to Claim 1, having a control mode to temporarily stop the switching operation at least in a vicinity of a peak value of an input current.

**Patentansprüche**

**1.** Stromversorgungsschaltung, umfassend:

eine Gleichrichterschaltung (2) zum Wandeln einer Wechselstromversorgung (1) in eine Gleichstromversorgung und
eine Glättungsschaltung (4),
wobei die Stromversorgungsschaltung ferner eine Steuereinheit (5) umfasst, die dazu ausgelegt ist, einen von einer Wechselstromversorgung (1) einfließenden Eingabestrom mittels einer Hochsetz-Zerhackschaltung (3) zu steuern,
wobei die Hochsetz-Zerhackschaltung (3) ein Schaltelement (31) zum Ausführen eines Schaltvorgangs auf der Grundlage eines Aussteuerverhältnis-Signals, ein Induktionselement (32) und eine Diode (33) umfasst, **gekennzeichnet dadurch, dass** das Schaltelement dazu ausgelegt ist, den ersten Schaltvorgang in einer Umgebung eines Spitzenwertes des momentanen Eingabestromwerts oder im zweiten Halbbereich eines Halbzyklus des Stromversorgungszyklus, in dem der Eingabestromwert von einem Spitzenwert abzufallen beginnt, zu beginnen.

**2.** Stromversorgungsschaltung nach Anspruch 1, ferner umfassend:

eine Eingabestrom-Informationserzeugungseinheit (52, 53) zum Erzeugen von Informationen über einen von einer Wechselstromversorgung einfließenden Eingabestrom und
wobei die Steuereinheit (5) dazu ausgelegt ist, ein Produkt der Informationen über einen Eingabestrom und eines gesetzten Koeffizienten zu berechnen und zumindest das Aussteuerverhältnis-Signal zum Definieren eines Betriebszustands des Schaltelements auf der Grundlage dieses Produkts zu erzeugen.

**3.** Stromversorgungsschaltung nach Anspruch 1, ferner umfassend:

eine Gleichstromspannung-Welligkeitskomponentendetektionseinheit zum Detektieren einer Welligkeitskomponente einer Gleichstromspannung, die eine Spannung zwischen beiden Enden der Glättungsschaltung ist, wobei das Schaltelement an einem Übergangspunkt eines Vorzeichens der von der Gleichstromspannung-Welligkeitskomponentendetektionseinheit detektierten Welligkeitskomponente einer Gleichstromspannung oder in einem Zeitabschnitt, während dessen die Welligkeitskomponente positiv ist, wobei der Zeitabschnitt als die Umgebung eines Spitzenwertes des momentanen Eingabestromwertes oder als der zweite Halbbereich eines Halbzyklus des Stromversorgungszyklus, in dem der Eingabestromwert von einem Spitzenwert abfällt, angesehen wird, dazu ausgelegt ist, den ersten Schaltvorgang zu beginnen.

**4.** Stromversorgungsschaltung nach Anspruch 1, ferner umfassend:

eine Berechnungseinheit zum Berechnen einer Größe des Eingabestroms und
eine Vergleichseinheit zum Vergleichen der Größe des Eingabestroms mit dem momentanen Eingabestromwert, wobei das Schaltelement (31) in einen Zeitraum, während dessen der momentane Eingabestromwert höher als die Größe des Eingabestromwerts ist, wobei der Zeitraum als die Umgebung des Spitzenwerts des momentanen Eingabestromwerts oder als der zweite Halbbereich eines Halbzyklus des Stromversorgungszyklus, in dem der Eingabestromwert von einem Spitzenwert abfällt, angesehen wird, dazu ausgelegt ist, den ersten Schaltvorgang zu beginnen.

**5.** Stromversorgungsschaltung nach Anspruch 4,
wobei als die Größe des Eingabestroms entweder ein Durchschnittswert oder ein effektiver Wert des momentanen Eingabestromwerts oder ein durch Multiplizieren eines gefilterten Werts des momentanen Eingabestromwerts mit einem vorgegebenen Koeffizienten erhaltener Wert verwendet wird.

**6.** Stromversorgungsschaltung nach Anspruch 1, ferner umfassend:

eine Einheit zum Detektieren einer Stromversorgungsspannungsphase der Wechselstromversorgung,
wobei das Schaltelement (31) in einem Zeitraum, während dessen die Stromversorgungsspannungsphase eine vorgegebene Phase ist, wobei der Zeitraum als die Umgebung des Spitzenwerts des momentanen Eingabestromwerts oder als der zweite Halbbereich eines Halbzyklus des Stromversorgungszyklus, in dem der Eingabestromwert von einem Spitzenwert abfällt, angesehen wird, dazu ausgelegt ist, den ersten Schaltvorgang zu beginnen.

**7.** Motorantriebsvorrichtung, umfassend:

die Stromversorgungsschaltung nach Anspruch 2,
wobei als eine Last der Stromversorgungsschaltung ein Motor und eine Wandlerschaltung zum Antreiben des Motors mit der Stromversorgungsschaltung verbunden sind, wobei die Motorantriebsvorrichtung ferner eine Koeffizientenänderungseinheit zum Ändern des Koeffizienten auf eine Drehzahl des Motors oder einen Lastzustand hin umfasst.

**8.** Kühl- und Klimaanlagenvorrichtung,
wobei die Motorantriebsvorrichtung nach Anspruch 7 auf einen Antrieb eines Kompressorantriebsmotors der Kühl- und Klimaanlagenvorrichtung angewendet wird.

**9.** Modul, umfassend:

die Stromversorgungsschaltung nach Anspruch 1,
eine Wandlerschaltung zum Antreiben eines Motors als eine Last der Stromversorgungsschaltung und
eine Steuerschaltung zum Steuern der Wandlerschaltung und der darin integrierten Stromversorgungsschaltung.

**10.** Stromversorgungsschaltung nach Anspruch 1,
wobei zu einem Zeitpunkt des ersten Schaltvorgangs des Schaltelements (31) eine Schaltfrequenz des Schaltelements höher als eine normale Schaltfrequenz ist.

**11.** Stromversorgungsschaltung nach Anspruch 1,
wobei das Schaltelement (31) dazu ausgelegt ist, den ersten Schaltvorgang in einer Umgebung eines Spitzenwerts des momentanen Eingabestromwerts oder im zweiten Halbbereich eines Halbzyklus des Stromversorgungszyklus, in dem der Eingabestromwert von einem Spitzenwert abzufallen beginnt, zu beginnen, und wobei eine Schaltfrequenz des Schaltelements höher als eine normale Schaltfrequenz ist.

**12.** Stromversorgungsschaltung nach Anspruch 1,
wobei das Schaltelement (31) dazu ausgelegt ist, den ersten Schaltvorgang nach einem Halbzyklus der Wechselstromversorgungsspannung zu beginnen.

**13.** Stromversorgungsschaltung nach Anspruch 1,
mit einem Steuermodus zum zeitweiligen Stoppen des Schaltvorgangs zumindest in einer Umgebung eines Spitzenwerts eines Eingabestroms.

**Revendications**

**1.** Circuit d'alimentation comportant :

un circuit redresseur (2) pour convertir une alimentation en courant alternatif (1) en une alimentation en courant continu et

un circuit de lissage (4),

le circuit d'alimentation comportant en outre une unité de commande (5) adaptée pour commander un courant d'entrée s'écoulant depuis l'alimentation en courant alternatif (1) à l'aide d'un circuit convertisseur élévateur (3), le circuit convertisseur élévateur (3) comportant un élément de commutation (31) pour effectuer une opération de commutation sur la base d'un signal de rapport cyclique, une bobine d'inductance (32) et une diode (33), **caractérisé en ce que** l'élément de commutation (31) est adapté pour démarrer la première opération de commutation à proximité d'une valeur de crête de la valeur instantanée du courant d'entrée ou dans la seconde demi-région d'un demi-cycle du cycle d'alimentation dans lequel la valeur de courant d'entrée commence à chuter à partir d'une valeur de crête.

2. Circuit d'alimentation selon la revendication 1 comportant en outre une unité de génération d'informations de courant d'entrée (52, 53) pour générer des informations sur un courant d'entrée circulant à partir de l'alimentation en courant alternatif, et

l'unité de commande (5) adaptée pour calculer un produit des informations sur un courant d'entrée et un coefficient donné, et pour générer au moins le signal de rapport cyclique pour définir une opération de l'élément de commutation sur la base de ce produit.

3. Circuit d'alimentation selon la revendication 1, comportant en outre

une unité de détection de composante d'ondulation de la tension continue pour détecter une composante d'ondulation d'une tension continue qui est une tension entre les deux extrémités du circuit de lissage,

dans lequel à un moment de transition d'un signe de la composante d'ondulation d'une tension continue détectée par l'unité de détection de composante d'ondulation continue, ou dans une période au cours de laquelle la composante d'ondulation est positive, la période étant considérée comme le voisinage d'une valeur de crête de la valeur instantanée de courant d'entrée ou la seconde demi-région d'un demi-cycle du cycle d'alimentation dans lequel la valeur de courant d'entrée commence à chuter à partir d'une valeur de crête, l'élément de commutation est adapté pour lancer la première opération de commutation.

4. Circuit d'alimentation selon la revendication 1, comportant en outre :

une unité de calcul pour calculer une amplitude du courant d'entrée, et

une unité de comparaison pour comparer l'amplitude du courant d'entrée à la valeur instantanée du courant d'entrée,

dans lequel dans une période au cours de laquelle la valeur instantanée du courant d'entrée est supérieure à l'amplitude du courant d'entrée, la période étant considérée comme le voisinage de la valeur de crête de la valeur instantanée du courant d'entrée ou la seconde demi-région d'un demi-cycle du cycle d'alimentation dans lequel la valeur de courant d'entrée commence à chuter à partir d'une valeur de crête, l'élément de commutation (31) est adapté pour lancer la première opération de commutation.

5. Circuit d'alimentation selon la revendication 4, dans lequel, en tant qu'amplitude du courant d'entrée, une valeur moyenne ou une valeur effective de la valeur instantanée du courant d'entrée, ou une valeur obtenue en multipliant une valeur filtrée de la valeur instantanée du courant d'entrée par un coefficient prédéterminé est utilisée.

6. Circuit d'alimentation selon la revendication 1, comportant en outre :

une unité pour détecter une phase de la tension d'alimentation de l'alimentation en courant alternatif, dans lequel dans une période au cours de laquelle la phase de la tension d'alimentation est une phase prédéterminée, la période étant considérée comme le voisinage de la valeur de crête de la valeur instantanée du courant d'entrée ou la seconde demi-région d'un demi-cycle du cycle d'alimentation dans lequel la valeur de courant d'entrée commence à chuter à partir d'une valeur de crête, l'élément de commutation (31) est adapté pour lancer la première opération de commutation.

7. Dispositif d'entraînement de moteur comportant :

le circuit d'alimentation selon la revendication 2,

dans lequel, en tant que charge du circuit d'alimentation, un moteur et un circuit d'onduleur pour entraîner le moteur sont couplés au circuit d'alimentation, le dispositif d'entraînement de moteur comportant en outre une unité de changement de coefficient pour changer le coefficient en réponse à une vitesse de rotation du moteur ou à un état de charge.

**8.** Système de réfrigération et de climatisation, dans lequel le dispositif d'entraînement de moteur selon la revendication 7 est appliqué à un entraînement d'un moteur d'entraînement de compresseur du système de réfrigération et de climatisation.

**9.** Module comportant :

le circuit d'alimentation selon la revendication 1,
un circuit onduleur pour entraîner un moteur en tant que charge du circuit d'alimentation, et
un circuit de commande pour commander le circuit onduleur et le circuit d'alimentation qui est intégré dans celui-ci.

**10.** Circuit d'alimentation selon la revendication 1,
dans lequel, au moment de la première opération de commutation de l'élément de commutation (31), une fréquence de commutation de l'élément de commutation est supérieure à une fréquence de commutation normale.

**11.** Circuit d'alimentation selon la revendication 1,
dans lequel l'élément de commutation (31) est adapté pour lancer la première opération de commutation à proximité d'une valeur de crête de la valeur instantanée de courant d'entrée ou dans la seconde demi-région d'un demi-cycle du cycle d'alimentation au cours duquel la valeur de courant d'entrée commence à chuter à partir d'une valeur de crête, et dans lequel une fréquence de commutation de l'élément de commutation est supérieure à une fréquence de commutation normale.

**12.** Circuit d'alimentation selon la revendication 1,
dans lequel l'élément de commutation (31) est adapté pour démarrer la première opération de commutation après un demi-cycle de la tension d'alimentation en courant alternatif.

**13.** Circuit d'alimentation selon la revendication 1, ayant un mode de commande pour arrêter temporairement l'opération de commutation au moins à proximité d'une valeur de crête d'un courant d'entrée.

# FIG.1

# FIG.2

## FIG.3

```
      OPERATION START
   DETERMINATION PROCESS
```

(A) IS POWER SUPPLY CIRCUIT ACTIVATION CONDITION SATISFIED ? — NO

YES

(B) IS RIPPLE COMPONENT OF DC VOLTAGE NEGATIVE ? — NO

YES

(C) IS RIPPLE COMPONENT OF DC VOLTAGE POSITIVE ? — NO

YES

(D) ACTIVATE POWER SUPPLY CIRCUIT (OUTPUT SWITCHING SIGNAL)

END

## FIG.4

(a) DC VOLTAGE — DC VOLTAGE AVERAGE VALUE

(b) POWER SUPPLY VOLTAGE / INPUT CURRENT

A B C D

# FIG.5A

SWITCHING OPERATION START POINT

# FIG.5B

SWITCHING OPERATION START POINT

# FIG.6

OPERATION START
DETERMINATION PROCESS

(A) IS POWER
SUPPLY CIRCUIT
ACTIVATION CONDITION
SATISFIED
? — NO

YES

(C) IS RIPPLE
COMPONENT OF DC
VOLTAGE POSITIVE
? — NO

YES

(D) ACTIVATE POWER SUPPLY CIRCUIT
(OUTPUT SWITCHING SIGNAL)

END

19

# FIG.7

(A) IS POWER SUPPLY CIRCUIT ACTIVATION CONDITION SATISFIED ? — NO

YES

(E) I is I > Is ? — NO

YES

I is I : INSTANTANEOUS CURRENT VALUE
Is : AVERAGE CURRENT VALUE

(D) ACTIVATE POWER SUPPLY CIRCUIT (OUTPUT SWITCHING SIGNAL)

END

# FIG.8

(a) POWER SUPPLY VOLTAGE / INPUT CURRENT

(b) INPUT CURRENT (DC SIDE) / DC CURRENT AVERAGE VALUE (DC SIDE)

A1 A2

# FIG.9

OPERATION START
DETERMINATION PROCESS

(A) — IS POWER SUPPLY CIRCUIT ACTIVATION CONDITION SATISFIED ? — NO

YES

(F) — IS A VOLTAGE PHASE A PREDETERMINED PHASE ? — NO

YES

(D) ACTIVATE POWER SUPPLY CIRCUIT (OUTPUT SWITCHING SIGNAL)

END

# FIG.10

# FIG.11

# FIG.12

# FIG.13

# FIG.14

# FIG.15

400

200

300

100

600

# FIG.16

BOOST RATIO:a, DC VOLTAGE:Ed

Ed

a

MOTOR ROTATIONAL SPEED

## FIG.17A

POWER SUPPLY VOLTAGE

OVERCURRENT OCCURS

INPUT CURRENT

MAXIMUM WIDTH PULSE OCCURS — | NORMAL WIDTH PULSE

## FIG.17B

POWER SUPPLY VOLTAGE

INPUT CURRENT

PULSE OCCURS DUE TO THE CURRENT — | NORMAL WIDTH PULSE

REGION IN WHICH ACTIVATION IS POSSIBLE

# FIG.18

```
        ╭──────────────────────────╮
        │    OPERATION START       │
        │  DETERMINATION PROCESS   │
        ╰──────────────────────────╯
                    │
        ┌──────────────────────────┐
  (G)   │   SET SWITCHING FREQUENCY│
        │      TO HIGH FREQUENCY   │
        └──────────────────────────┘
                    │
                    ▼
                  ◇
  (A)      IS POWER              NO
        SUPPLY CIRCUIT  ──────────┐
     ACTIVATION CONDITION          │
         SATISFIED                 │
            ?                      │
                  │ YES           │
        ┌──────────────────────────┐
  (D)   │ ACTIVATE POWER SUPPLY CIRCUIT│
        │  (OUTPUT SWITCHING SIGNAL)│
        └──────────────────────────┘
                    │
                    ▼
                  ◇
  (H)      IS SWITCHING          NO
      FREQUENCY CHANGE  ──────────┐
     CONDITION SATISFIED           │
            ?                      │
                  │ YES           │
        ┌──────────────────────────┐
  (I)   │  SET SWITCHING FREQUENCY │
        │    TO NORMAL FREQUENCY   │
        └──────────────────────────┘
                    │
              ╭──────────╮
              │   END    │
              ╰──────────╯
```

# FIG.19A

# FIG.19B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S59198873 A
- JP 2809463 B
- JP HO1114372 A
- JP H01114372 A
- JP 3424461 B
- JP H0568376 A
- JP 2006067730 A
- EP 0921626 A2